Europäisches Patentamt

European Patent Office

Office européen des brevets

(11) Veröffentlichungsnummer: **0 072 496**
**B1**

(12) **EUROPÄISCHE PATENTSCHRIFT**

(45) Veröffentlichungstag der Patentschrift:
18.12.85

(21) Anmeldenummer: 82107050.5

(22) Anmeldetag: 04.08.82

(51) Int. Cl.⁴: **B 01 D 53/04**

(54) Verfahren zur adsorptiven Zerlegung eines Gasgemisches.

(30) Priorität: 18.08.81 DE 3132572

(43) Veröffentlichungstag der Anmeldung:
23.02.83 Patentblatt 83/8

(45) Bekanntmachung des Hinweises auf die Patenterteilung:
18.12.85 Patentblatt 85/51

(84) Benannte Vertragsstaaten:
BE DE FR GB IT

(56) Entgegenhaltungen:
US - A - 3 102 013

(73) Patentinhaber: Linde Aktiengesellschaft,
Abraham-Lincoln-Strasse 21, D-6200 Wiesbaden (DE)

(72) Erfinder: Linde, Gerhard, Dr.Ing., Eichleite 50,
D-8022 Grünwald (DE)

(74) Vertreter: Schaefer, Gerhard, Dr., Linde
Aktiengesellschaft Zentrale Patentabteilung,
D-8023 Höllriegelskreuth (DE)

ACTORUM AG

## Beschreibung

Die Erfindung betrifft ein Verfahren zur adsorptiven Zerlegung eines aus mindestens zwei Komponenten bestehenden Gasgemisches in mindestens zwei, jeweils aus mindestens einer Komponente bestehende Produktfraktionen.

Ein derartiges Verfahren in Anwendung auf ein im wesentlichen aus zwei Komponenten bestehendes Gasgemisch ist aus der DE-OS 24 41 447 bekannt. Dort ist die Zerlegung von Luft in eine nahezu vollständig aus Stickstoff bestehende und eine an Sauerstoff angereicherte Produktionsfraktion beschrieben. Als Adsorptionsmittel werden Molekularsiebkokse verwendet, die ein starkes Adsorptionsvermögen für Sauerstoff besitzen. Während der Adsorptionsphase wird demnach aus dem mit Molekularsiebkoks beschickten Adsorptionsbett eine zu über 99 Vol.% mit Stickstoff angereicherte Produktfraktion abgezogen, wobei die Adsorption bei überatmosphärischem Druck und die Desorption durch Evakuieren erfolgen. Die bei der Desorption gewonnene Gasfraktion ist zu ungefähr 35 Vol.% mit Sauerstoff angereichert. Das Verfahren wird mit mindestens zwei Adsorbern in zyklischer Vertauschung betrieben. Als wesentliches Merkmal des bekannten Verfahrens muss im Ergebnis angesehen werden, dass nur eine der in dem zu zerlegenden Gasgemisch, nämlich der Luft, enthaltenen Komponenten, nämlich der Stickstoff, hoch angereichert erhalten wird.

Mit ähnlichen Verfahren wurden bisher nicht nur Luft, sondern auch andere Gasgemische zerlegt. Beispielsweise ist es möglich, verschiedene Kohlenwasserstoffgemische durch selektive Adsorption einzelner Komponenten an zeolithischen Molekularsieben zu zerlegen. Auch hier werden die unterschiedlichen Selektivitäten verschiedener Molekularsiebtypen für jeweils andere Kohlenwasserstoffe ausgenutzt. Es werden beispielsweise die leichtesten n-Paraffine, nämlich Methan und Äthan, selektiv von zeolithischem Molekularsieb des Typs 4A, $C_3$- und höhere n-Paraffine vom Molekularsieb des Typs 5A und $C_4$- und höhere i-Paraffine von Molekularsieben der Typen 10X und 13X selektiv zurückgehalten. Bei der Verwendung der genannten Molekularsiebtypen zur Zerlegung von Kohlenwasserstoffgemischen, die mehr als zwei wertvolle Komponenten enthalten, konnte bisher in einem Adsorptionsschritt lediglich eine Komponente in hoch angereicherter Form gewonnen werden. Zur weiteren Auftrennung war es erforderlich, das zunächst adsorbierte Komponentengemisch einer zweiten Adsorptionsstufe zuzuführen. Da jede dieser aufeinanderfolgenden Adsorptionsstufen für sich in zyklischer Vertauschung betrieben wird, ist mit der Hintereinanderschaltung mehrerer Stufen ein entsprechender apparativer und verfahrenstechnischer Aufwand verbunden.

Der Erfindung liegt die Aufgabe zugrunde, ein Verfahren der eingangs erwähnten Art und eine Vorrichtung bereitzustellen, die es ermöglichen, Zwei- und Mehrkomponentengemische auf in apparativer und verfahrenstechnischer Hinsicht möglichst wirtschaftliche Weise in die jeweils gewünschte Anzahl hoch angereicherter Produktfraktionen unterschiedlicher Zusammensetzung zu zerlegen.

Die Aufgabe wird dadurch gelöst, dass das Gemisch in eine der Zahl der Produkfraktionen entsprechende Anzahl von Teilströmen aufgeteilt und jeder Teilstrom während einer Adsorptionsphase in ein ihm zugeordnetes Adsorptionsbett eingeführt wird, wobei Art und Beschaffenheit der Adsorptionsmittel jeweils so gewählt sind, dass während der Adsorptionsphase in jedem der Adsorptionsbetten eine andere Komponente oder Gruppe von Komponenten bevorzugt zurückgehalten wird und gleichzeitig jeweils eine andere der gewünschten Produktfraktionen abströmt.

Mit Hilfe des erfindungsgemässen Verfahrens kann ein Gasgemisch in einer einzigen Adsorptionsstufe in mehrere hoch angereicherte Produktfraktionen zerlegt werden. So ist es beispielsweise möglich, jede einzelne gewünschte Komponente aus einem zu zerlegenden Gasgemisch im hoch angereicherter Form zu gewinnen, ohne dass zu diesem Zweck zwei oder mehrere Adsorptionsstufen hintereinander geschaltet werden müssen. Es gelingt auch, hoch angereicherte Produktfraktionen zu erhalten, die beispielsweise aus zwei gewünschten Komponenten bestehen, deren weitere Auftrennung nicht erforderlich ist. Die Adsorptionsmittel sind dabei so zu wählen, dass in jedem Adsorptionsbett mindestens eine andere der Komponenten bevorzugt zurückgehalten wird. Für den beim Verfahren gemäss der Erfindung eingeschlossenen Fall, dass in einem oder allen Adsorptionsbetten etwa jeweils zwei Komponenten bevorzugt zurückgehalten sind, können Mischbetten verwendet werden, die zwei für jeweils eine der Komponenten selektive Adsorptionsmittel enthalten.

Das Verfahren gemäss der Erfindung wird zweckmässig so durchgeführt, dass mindestens zwei gleichberechtigte, zyklisch umschaltbare Systeme von Adsorptionsbetten verwendet werden, wobei ein System eine der Zahl der Produktfraktionen entsprechende Anzahl strömungsmässig parallel geschalteter Adsorptionsbetten enthält. Mindestens eines der Systeme parallel geschalteter Adsorptionsbetten befindet sich jeweils in der Adsorptionsphase, mindestens ein anderes in der Desorptionsphase.

Im allgemeinen wird es zweckmässig sein, die Adsorberanlage im Druckwechselverfahren zu betreiben, da bei diesem Verfahren zusätzliche Heizmittel und Spülgasleitungen entfallen.

Gemäss der Erfindung ist demnach nicht ausgeschlossen, dass mehr als nur zwei zyklisch umschaltbare Systeme von Adsorptionsbetten verwendet werden und anstelle einer einzigen Desorptionsphase beispielsweise zwei durchgeführt werden, wobei zuerst im wesentlichen das im Lückenvolumen befindliche Gasgemisch, das auch Anteile an nichtadsorbierbaren Komponenten aufweisen und dessen Zusammensetzung der des unzerlegten Gasgemisches sehr nahe kommen kann, und erst danach das eigentliche Desorbat abgezogen werden.

Eine Vorrichtung zur adsorptiven Zerlegung eines aus mindestens zwei Komponenten bestehenden Gasgemisches in mindestens zwei, jeweils aus mindestens einer Komponente bestehenden Produktfraktion in mindestens einem ein Adsorptionsbett aufweisenden Adsorber, der eine Gaszuführungsleitung, eine Produktleitung sowie eine Desorbatleitung aufweist, wobei die Leitungen jeweils mit Ventilen ausgestattet sind, ist durch mindestens zwei zyklisch umschaltbare Adsorber gekennzeichnet, in denen jeweils ein System von Adsorptionsbetten angeordnet ist, das eine der Zahl der Produktfraktionen entsprechende Anzahl strömungsmässig parallel geschalteter Adsorptionsbetten enthält. Vorteilhaft weisen die Adsorptionsbetten verschiedene Adsorptionsmittel auf. Jedes dieser Systeme ist somit von einem einzigen Adsorberbehälter umschlossen, womit eine hinsichtlich der Herstellungskosten besonders günstige Anlageform gegeben ist. Selbstverständlich ist es so auch möglich, ein System von mehr als zwei Adsorptionsbetten in einem einzigen Adsorberbehälter unterzubringen, wobei die einzelnen Adsorptionsbetten jeweils strömungsmässig voneinander getrennt werden müssen. Dies kann durch Trennwände geschehen, die sich über den Behälterquerschnitt erstrecken und mit den Behälterwänden dicht verbunden sind.

Um das Durchbrechen einer zurückgehaltenen Komponente zu verhindern, hat es sich als zweckmässig erwiesen, wenn die Adsorptionsbetten eines Systems zumindest teilweise eine unterschiedliche Schütthöhe aufweisen. Die in Strömungsrichtung gemessene Schütthöhe der Adsorptionsbetten richtet sich dabei nach den Mengen der dort jeweils zurückzuhaltenden Komponenten im Gasgemisch. Im allgemeinen wird eine derartige Anlage so betrieben werden, dass in den Adsorptionsbetten gleichzeitig die maximal erwünschte Beladung erreicht wird, ohne dass dabei ein Durchbruch einer in einem Adsorptionsbett zurückgehaltenen Komponente erfolgt.

Im Falle der Gewinnung zweier Produktströme ist es zweckmässig, dass in jedem der Adsorber zwei axial hintereinander angeordnete Adsorptionsbetten vorgesehen sind, dass eine Gaszuführungsleitung in den Bereich zwischen den Adsorptionsbetten führt und Produktgasleitungen aus den Endbereichen des Adsorbers hinausführen. In diesem Falle wird das zu zerlegende Gasgemisch zwischen beiden Adsorptionsbetten eingeführt und in jedem der beiden Adsorptionsbetten eine andere Komponente bevorzugt zurückgehalten. Somit erübrigt sich eine Trennwand zwischen den beiden Adsorptionsbetten, da eine Aufteilung des Gasgemisches in zwei in entgegengesetzter Richtung zu den Enden des Adsorberbehälters hin fliessende Teilströme von selbst erfolgt.

Eine besondere Anwendungsform des erfindungsgemässen Verfahrens besteht in der Zerlegung von Luft. Als Adsorptionsmittel in einem Adsorptionsbett ist dabei ein bevorzugt Stickstoff zurückhaltendes zeolithisches Molekularsieb und in dem anderen Adsorptionsbett ein bevorzugt Sauerstoff zurückhaltendes Kohlenstoff-Molekularsieb vorgesehen. Damit wird es möglich, in Verbesserung des eingangs erwähnten bekannten Verfahrens, Luft in der Weise zu zerlegen, dass gleichzeitig nahezu reiner Stickstoff und sehr hoch angereicherter Sauerstoff gewonnen werden.

Bei der Gewinnung zweier Produktströme, wie Stickstoff und Sauerstoff im Falle der Luft als zu zerlegendes Gasgemisch, hat es sich als zweckmässig erwiesen, wenn eine aus dem Bereich zwischen den Adsorptionsbetten herausführende Desorbatleitung vorgesehen ist. Dann kann nämlich so vorgegangen werden, dass während der Desorption bei vermindertem Druck beide Desorbatfraktionen gemeinsam zwischen beiden Adsorptionsbetten abgezogen werden. Diese wenig wertvollen Fraktionen können in die Atmosphäre abgeblasen werden.

Das erfindungsgemässe Verfahren ist jedoch nicht nur auf die Zerlegung von Luft anwendbar, sondern lässt sich auch beispielsweise auf die Abtrennung bestimmter Kohlenwasserstoffe aus diese enthaltenden Kohlenwasserstoffgemischen anwenden.

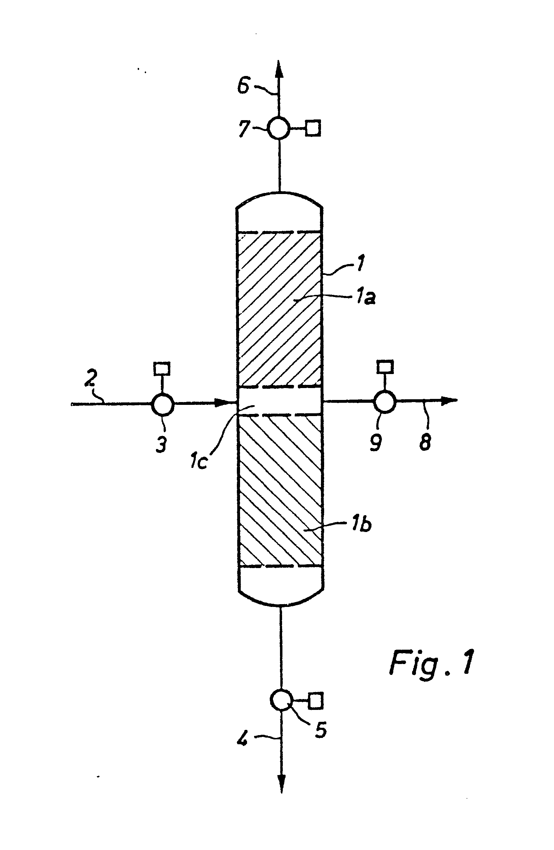

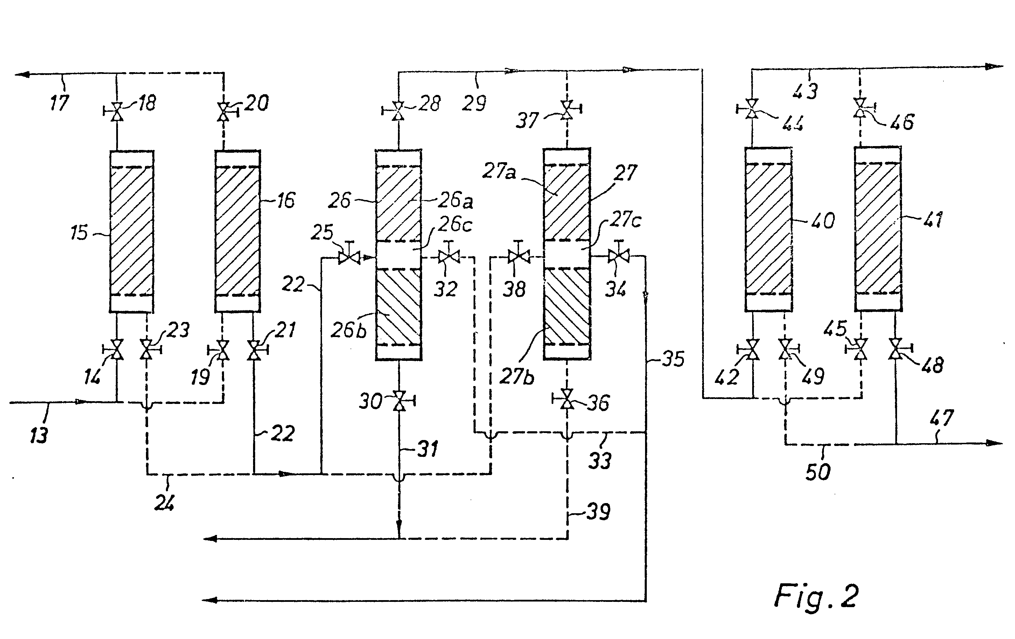

Im folgenden wird das erfindungsgemässe Verfahren anhand zweier in den Figuren 1 und 2 schematisch dargestellten Ausführungsbeispielen näher erläutert.

Dabei zeigt:

Figur 1 einen doppelflutigen Adsorber für eine PSA-Anlage zur Luftzerlegung

Figur 2 doppelflutige Adsorber zur Zerlegung von Purgegas aus der Ammoniak-Synthese.

In der Figur 1 ist nur ein Adsorber 1 dargestellt. Für die Durchführung des erfindungsgemässen Verfahrens ist es für einen Fachmann selbstverständlich, dass mindestens zwei derartige Adsorber vorhanden sind, wobei sich immer mindestens ein Adsorber in der Adsorptions- und gleichzeitig mindestens ein anderer Adsorber in der Desorptionsphase befindet.

Erfindungsgemäss sind die Adsorber doppelflutig ausgebildet, d.h. in dem Adsorber 1 sind zwei Adsorptionsbetten 1a, 1b mit unterschiedlichen Adsorptionsmitteln angeordnet, die durch einen Bereich 1c voneinander getrennt sind.

In diesen doppelflutigen Adsorber 1 treten über eine Gaszuführungsleitung 2 mit Ventil 3 10 000 Nm³/h verdichtete Luft unter einem Druck von z.B. 4 bar ein, und zwar in den Bereich 1c zwischen den Adsorptionsbetten 1a, 1b. Als Adsorptionsmittel in dem unteren Adsorptionsbett 1b ist ein bevorzugt Stickstoff zurückhaltendes zeolithisches Molekularsieb, beispielsweise vom Typ 5A oder 13X, und in dem Adsorptionsbett 1a ein bevorzugt Sauerstoff zurückhaltendes Kohlenstoff-Molekularsieb vorgesehen. Die Schütthöhe der Adsorptionsmittel entsprechen dabei den zu gewinnenden Produktmengen, was im Falle der Luft dazu führt, dass die Schütthöhe des Kohlenstoff-Molekularsiebes grösser ist als die des zeolithischen Molekularsiebs.

Die Aufteilung der eingetretenen Luft in zwei in entgegengesezter Richtung die Adsorptionsbetten 1a und 1b durchfliessenden Teilströme erfolgt von selbst, so dass über eine Produktleitung 4 mit Ventil 5 500 Nm$^3$/h hoch angereicherten Sauerstoffs (ca. 95% Reinheit) unter einem Druck von 4 bar und über eine Produktleitung 6 mit Ventil 7 3 000 Nm$^3$/h reiner Stickstoff mit einem Druck von 4 bar (ca. 99% Reinheit) abgezogen werden kann.

In Verbesserung des eingangs erwähnten bekannten Verfahrens wird auf diese Weise gleichzeitig nahezu reiner Stickstoff und sehr hoch angereicherter Sauerstoff gewonnen, wobei ausserdem erhebliche Investitionseinsparungen erreicht werden. So ist nur ein Luftverdichter erforderlich, die Anzahl der Schaltventile reduziert sich ebenso wie die Anzahl der gewölbten Böden für die Adsorberbehälter.

Die anschliessende Desorption, während der sich der andere Adsorber in der Adsorptionsphase befindet, erfolgt bei vermindertem Druck, z.B. 1 bar. Die dabei freiwerdenden Desorbatfraktionen, im vorliegenden Beispiel 6 500 Nm$^3$/h, enthalten noch ca. 23% $O_2$ und werden gemeinsam über eine Desorbatleitung 8 mit Ventil 9 aus dem Bereich 1c zwischen den Adsorptionsbetten 1a, 1b abgezogen. Diese Fraktionen können dann im Falle der Luftzerlegung in die Atmosphäre abgeblasen werden.

Bei der Trennung bestimmter Kohlenwasserstoffe voneinander dagegen empfiehlt es sich, die an sich wertvollen Desorbatfraktionen dem in die Adsorptionsanlage eintretenden Gasgemisch zuzumischen und erneut einer Adsorption zu unterwerfen.

Figur 2 zeigt eine Anlage zur Zerlegung von Purgegas aus der Ammoniak-Synthese. Über eine Leitung 13 mit Ventil 14 gelangen 10 000 Nm$^3$/h Purgegas aus der NH$_3$-Synthese unter einem Druck von ca. 40 bar in eine im Druckwechsel arbeitende Adsorbtionsanlage mit mindestens zwei Adsorbern 15 und 16. Das Purgegas hat dabei folgende Zusammensetzung:

| | |
|---|---|
| H$_2$ | 6.300 Nm$^3$/h |
| N$_2$ | 2.100 Nm$^3$/h |
| Ar | 800 Nm$^3$/h |
| CH$_4$ | 800 Nm$^3$/h |

In den Adsorbern 15 bzw. 16 sollen die Verunreinigungen des Wasserstoffs – Stickstoff, Argon und Methan – zurückgehalten werden, wozu die Adsorber jeweils mit einem zeolitischen Molekularsieb, z.B. vom Typ 5A beschickt sind. Beim Durchströmen des Purgegases durch Adsorber 15 werden diese Verunreinigungen absorbiert und über Leitung 17 mit Ventil 18 5.000 Nm$^3$/h reiner Wasserstoff abgeführt. Währenddessen desorbiert Adsorber 16, der sich zuvor bei geöffneten Ventilen 19 und 20 und geschlossenen Ventilen 14 und 18 in der Adsorptionsphase befunden hat, bei vermindertem Druck, beispielsweise 8 bar. Über eine Desorbatleitung 22 mit Ventil 21 werden dabei aus dem Adsorber 16 1.300–m$^3$/h H$_2$,

2.100 Nm$^3$/h N$_2$, 800 Nm$^3$/h Ar und 800 Nm$^3$/h CH$_4$ abgezogen. Während der anschliessenden Adsorbtionsphase von Adsorber 16 befindet sich Adsorber 15 in der Desorptionsphase, d.h. bei geschlossenen Ventilen 14 und 18 werden über eine Leitung 24 und geöffnetem Ventil 23 die genannten Mengen der Desorbatfraktion abgezogen.

Zur vollständigen Regenerierung der Adsorber kann dabei von Zeit zu Zeit ein Adsorber aus der Anlage, die dann aus mindestens drei Adsorbern besteht, herausgenommen werden.

Das Desorbat aus Leitung 22 wird über ein Ventil 25 zu einer aus den Adsorbern 26 und 27 bestehenden weiteren PSA-Anlage geführt, und zwar in die Mitte des Adsorbers 26.

Die Adsorber 26 und 27 sind doppelflutig ausgebildet, wobei jeweils das obere Adsorptionsbett (26a, 27a) mit einem Stickstoff- und Methan- zurückhaltenden zeolithischen Molekularsieb, z.B. vom Typ 5A oder 13X, und das untere Adsorptionsbett (26b, 27b) mit einem Mischbett aus einem Argon zurückhaltenden modifizierten Kohlenstoffmolekularsieb und Methan zurückhaltender Aktivkohle beschickt sind. Dadurch kann gemäss der Erfindung das herangeführte (Desorbat-) Gas zerlegt werden.

Das Desorbatgas tritt unter einem Druck von 8 bar in den Bereich 26c zwischen den beiden Adsorptionsbetten 26a und 26b des Adsorbers 26 ein und teilt sich in zwei in entgegengesetzter Richtung die Adsorptionsbetten 26a und 26b durchfliessende Teilströme auf, so dass über Leitung 29 mit Ventil 28 600 Nm$^3$/h H$_2$ und 400 Nm$^3$/h Ar und über Leitung 31 mit Ventil 30 600 Nm$^3$/h H$_2$ und 1.050 Nm$^3$/h N$_2$ unter einem Druck von ca. 7,5 bar abströmen.

Währenddessen desorbiert der Adsorber 27, nachdem er sich zuvor bei geschlossenen Ventilen 25, 28 und 30 und geöffneten Ventilen 36, 37 und 38 in der Adsorptionsphase befunden hat, bei vermindertem Druck, z.B. 1,5 bar. Die dabei frei werdenden Desorbatfraktionen werden gemeinsam über eine Desorbatleitung 35 mit Ventil 34 bzw., wenn Adsorber 27 sich in der Adsorptions- und Adsorber 26 sich in der Desorptionsphase befinden, über die Desorbatleitung 33 mit Ventil 32, aus dem jeweiligen Bereich 27c bzw. 26c zwischen den Adsorptionsbetten abgezogen. Diese Desorbatfraktionen setzen sich aus 100 Nm$^3$/h H$_2$, 1050 Nm$^3$/h N$_2$, 400 Nm$^3$/h Ar und 800 Nm$^3$/h CH$_4$ zusammen und können als Heizgas weiterverwendet werden.

Die über Leitung 29 abziehende Produktfraktion aus Wasserstoff und Argon gelangt zur weiteren Zerlegung in eine anschliessende PSA-Anlage mit zwei Adsorbern 40 und 41, die jeweils mit einem modifizierten Kohlenstoffmolekularsieb beschickt sind. Das zu zerlegende Gas wird über Ventil 42 in den Adsorber 40 geführt, in dem das Argon adsorbiert wird, so dass über Leitung 43 mit Ventil 44 vom Kopf des Adsorbers 40 580 Nm$^3$/h reiner Wasserstoff mit einem Druck von 7 bar abgezogen und zur Ammoniaksynthese zurückgeführt werden können.

Währenddessen desorbiert der Adsorber 41, der sich zuvor bei geschlossenen Ventilen 42 und 44 und geöffneten Ventilen 45 und 46 in der Adsorptionsphase befunden hat, bei vermindertem Druck, z.B. 1,2 bar, so dass über eine Desorbatleitung 47 mit geöffnetem Ventil 48 400 Nm$^3$/h Argon, das noch mit 20 Nm$^3$/h Wasserstoff verunreinigt ist, abgeführt werden. Während der anschliessenden Adsorptionsphase von Adsorber 41 wird das mit Wasserstoff verunreinigte Argon aus dem sich dann in der Desorptionsphase befindenden Adsorber 40 über das geöffnete Ventil 49 und Desorbatleitung 50 abgezogen.

Durch das erfindungsgemässe Verfahren kann somit gleichzeitig zur Ammoniaksynthese verwendbares Produktgas und ein Produktgas, aus dem nach weiterer Zerlegung reiner Wasserstoff gewonnen werden kann, sowie als Desorbatfraktion Heizgas gewonnen werden.

**Patentansprüche**

1. Verfahren zur adsorptiven Zerlegung eines aus mindestens zwei Komponenten bestehenden Gasgemisches in mindestens zwei, jeweils aus mindestens einer Komponente bestehende Produktfraktionen, dadurch gekennzeichnet, dass das Gasgemisch in eine der Zahl der Produktfraktionen entsprechende Anzahl von Teilströmen aufgeteilt und jeder Teilstrom während einer adsorptiven Phase in ein ihm zugeordnetes Adsorptionsbett eingeführt wird, wobei Art und Beschaffenheit der Adsorptionsmittel jeweils so gewählt sind, dass während der Adsorptionsphase in jedem der Adsorptionsbetten eine andere Komponente oder Gruppe von Komponenten bevorzugt zurückgehalten wird und gleichzeitig jeweils eine andere der gewünschten Produktfraktionen abströmt.

2. Verfahren nach Anspruch 1, dadurch gekennzeichnet, dass mindestens zwei gleichberechtigte zyklisch umschaltbare Systeme von Adsorptionsmitteln verwendet werden, wobei ein System eine der Zahl der Produktfraktionen entsprechende Anzahl strömungsmässig parallel geschalteter Adsorptionsbetten enthält.

3. Verfahren nach Anspruch 1 oder 2, dadurch gekennzeichnet, dass als zu zerlegendes Gasgemisch Luft eingeführt und als Adsorptionsmittel für ein Adsorptionsbett ein bevorzugt Stickstoff zurückhaltendes zeolithisches Molekularsieb und für ein anderes Adsorptionsbett ein bevorzugt Sauerstoff zurückhaltendes Kohlenstoffmolekularsieb verwendet wird.

4. Vorrichtung zur adsorptiven Zerlegung eines aus mindestens zwei Komponenten bestehenden Gasgemisches in mindestens zwei, jeweils aus mindestens einer Komponente bestehenden Produktfraktion in mindestens einem ein Adsorptionsbett aufweisenden Adsorber, der eine Gaszuführungsleitung, eine Produktleitung sowie eine Desorbatleitung aufweist, wobei die Leitungen jeweils mit Ventilen ausgestattet sind, gekennzeichnet durch mindestens zwei zyklisch umschaltbare Adsorber, in denen jeweils ein System von Adsorptionsbetten angeordnet ist, das eine der Zahl der Produktfraktionen entsprechende Anzahl strömungsmässig parallel geschalteter Adsorptionsbetten enthält.

5. Vorrichtung nach Anspruch 4, dadurch gekennzeichnet, dass in den Adsorptionsbetten eines Systems verschiedene Adsorptionsmittel vorgesehen sind.

6. Vorrichtung nach Anspruch 4 oder 5, dadurch gekennzeichnet, dass die Adsorptionsbetten eines Systems zumindest teilweise eine unterschiedliche Schütthöhe aufweisen.

7. Vorrichtung nach Anspruch 4 bis 6 zur Gewinnung zweier Produktströme, dadurch gekennzeichnet, dass in jedem der Adsorber zwei axial hintereinander angeordnete Adsorptionsbetten (1a, 1b) vorgesehen sind, dass eine Gaszuführungsleitung (2) in dem Bereich (1c) zwischen den Adsorptionsbetten (1a, 1b) führt und Produktgasleitungen (4, 6) aus den Endbereichen der Adsorber hinausführen.

8. Vorrichtung nach Anspruch 7 zur Zerlegung von Luft, dadurch gekennzeichnet, dass als Adsorptionsmittel in einem Adsorptionsbett (1b) ein bevorzugt Stickstoff zurückhaltendes zeolithisches Molekularsieb und in dem anderen Adsorptionsbett (1a) ein bevorzugt Sauerstoff zurückhaltendes Kohlenstoffmolekularsieb vorgesehen ist.

9. Vorrichtung nach Anspruch 7 oder 8, dadurch gekennzeichnet, dass eine aus dem Bereich (1c) zwischen den Adsorptionsbetten (1a, 1b) herausführende Desorptionsgasleitung (8) vorgesehen ist.

**Revendications**

1. Procédé pour la séparation par adsorption d'un mélange gazeux contenant au moins deux composants en au moins deux fractions contenant chacune au moins un composant, caractérisé en ce que le mélange gazeux est séparé en un nombre de courants partiels correspondant au nombre de fractions et en ce que chaque courant partiel est amené pendant une phase d'adsorption dans un lit d'adsorption qui lui est associé, la nature et les propriétés de l'agent d'adsorption étant choisies de telle manière que, pendant la phase d'adsorption, un composant ou groupe de composants différents est retenu de manière préférentielle dans chacun des lits d'adsorption et en ce que, simultanément, une autre des fractions choisies est évacuée.

2. Procédé selon la revendication 1, caractérisé en ce que l'on utilise au moins deux systèmes de moyens d'adsorption équivalents commutables de manière cyclique, chaque système contenant des lits d'adsorption branchés en parallèle en nombre correspondant au nombre des fractions à séparer.

3. Procédé selon l'une des revendications 1 et 2, caractérisé en ce que, comme mélange gazeux à séparer, on introduit de l'air et comme agent d'adsorption pour un lit d'adsorption, on utilise un tamis moléculaire zéolitique retenant préférentiellement l'azote et comme autre lit d'adsorption un tamis moléculaire à base de carbone retenant préférentiellement l'oxygène.

4. Dispositif pour la séparation par adsorption d'un mélange gazeux contenant au moins deux composants en au moins deux fractions composées chacune d'au moins un composant, dans un adsorbeur formé d'au moins un lit d'adsorption qui comporte une canalisation d'amenée de gaz, une canalisation de produit ainsi qu'une canalisation de désorbat, les canalisations étant chacune équipée de vannes, caractérisé en ce qu'il comporte au moins deux adsorbeurs commutables de manière cyclique dans chacun desquels est disposé un système de lits d'adsorption, chaque système comportant des lits d'adsorption branchés en parallèle en nombre correspondant au nombre des fractions à séparer.

5. Dispositif selon la revendication 4, caractérisé en ce que les lits d'adsorption d'un système comportent les moyens d'adsorption différents.

6. Dispositif selon la revendication 4 ou 5, caractérisé en ce que les lits d'adsorption d'un système ont au moins en partie une hauteur de déversement différente.

7. Dispositif selon les revendications 4 à 6 pour l'obtention de deux courants de produit, caractérisé en ce que dans chacun des adsorbeurs sont prévus deux lits d'adsorption (1a, 1b) disposés axialement l'un derrière l'autre, en ce qu'une canalisation d'amenée de gaz (2) débouche dans un volume (1c) défini entre les lits d'adsorption (1a, 1b) et en ce que des canalisations de produits gazeux (4, 6) sont branchées sur les extrémités des adsorbeurs.

8. Dispositif selon la revendication 7 pour la séparation de l'air, caractérisé en ce que on utilise comme agent d'adsorption dans l'un des lits d'adsorption (1b) un tamis moléculaire zéolitique retenant préférentiellement l'azote, et dans l'autre lit d'adsorption (1a) un tamis moléculaire à base de carbone retenant préférentiellement l'oxygène.

9. Dispositif selon la revendication 7 ou 8, caractérisé en ce qu'une canalisation du gaz désorbé (8) est branchée sur le du volume (1c) défini entre les lits d'adsorption (1a, 1b).

**Claims**

1. A process for the adsorptive separation of a gas mixture consisting of at least two components into at least two product fractions which in each case consist of at least one component, characterised in that the gas mixture is divided into a number of part streams which corresponds to the number of the product fractions, and each part stream is introduced into an adsorption bed assigned thereto, during an adsorptive phase, the kind and quality of the adsorption menas being in each case so selected that during the adsorption phase, in each of the adsorption beds another component, or group of components, is preferentially retained and another of the required product fractions simultaneously escapes in each case.

2. A process as claimed in Claim 1, characterised in that at least two equal, cyclically-switchable systems of adsorption means are used, where a system comprises a number of adsorption beds, which are connected in parallel in terms of flow, which number corresponds to the number of the product fractions.

3. A process as claimed in Claim 1 or Claim 2, characterised in that air is introduced as a gas mixture to be separated and a zeolite molecular filter, which preferentially retains nitrogen, is used as an adsorption means of one adsorption bed, and a carbon molecular filter which preferentially retains oxygen, an adsorption means for another adsorption bed.

4. Apparatus for the adsorptive separation of a gas mixture consisting of at least two components into at least two product fractions, which in each case consist of at least one component, in at least one adsorber which has an adsorption bed and a gas supply line, a product line and a desorption line, the lines being equipped with valves in each case, characterised by at least two cyclically switchable adsorbers, in which in each case a system of adsorption beds is arranged, which system comprises a number of adsorption beds connected in parallel in terms of flow, said number corresponding to the number of the product fractions.

5. Apparatus as claimed in Claim 4, characterised in that different adsorption means are arranged in the adsorption beds of a system.

6. Apparatus as claimed in Claim 4 or Claim 5, characterised in that the adsorption beds of a system at least partially have different heights of charge.

7. Apparatus as claimed in Claims 4 to 6 for obtaining two product flows, characterised in that, in each of the adsorbers two adsorption beds (1a, 1b) axially arranged in series, are provided; and that a gas supply line (2) leads into the region (1c) between the adsorption beds (1a, 1b) and product gas lines (4, 6) lead out of the end regions of the adsorbers.

8. Apparatus as claimed in Claim 7 for the separation of air, characterised in that a zeolite molecular filter, which preferentially retains nitrogen, is provided as an adsorption means in an adsorption bed (1b), and a carbon molecular filter, which preferentially retains oxygen, is provided as an adsorption means in the other adsorption bed (1a).

9. Apparatus as claimed in Claim 7 or Claim 8, characterised in that a desorption gas line (8) is provided, which leads out of the region (1c) between the adsorption beds (1a, 1b).

1/2

Fig. 1

Fig. 2

0 072 496

2/2